Europäisches Patentamt

European Patent Office

Office européen des brevets

(19)

(11) Numéro de publication : **0 055 261**
**B1**

# FASCICULE DE BREVET EUROPÉEN

(12)

(45) Date de publication du fascicule du brevet :
24.04.85

(21) Numéro de dépôt : **81901686.6**

(22) Date de dépôt : **17.06.81**

(86) Numéro de dépôt international :
**PCT/FR 81/00076**

(87) Numéro de publication internationale :
**WO/8103629 (24.12.81 Gazette 81/30)**

(51) Int. Cl.⁴ : **B 09 B   3/00**, C 10 B 53/00,
F 23 G   5/00

(54) **PROCEDE ET DISPOSITIF DE TRAITEMENT DE PRODUITS HUMIDES.**

(30) Priorité : **17.06.80 FR 8013407**

(43) Date de publication de la demande :
**07.07.82 Bulletin 82/27**

(45) Mention de la délivrance du brevet :
**24.04.85 Bulletin 85/17**

(84) Etats contractants désignés :
**CH DE FR GB LI NL SE**

(56) Documents cités :
**DE-A- 1 502 151**
**DE-B- 2 235 255**
**FR-A-   323 293**
**FR-A-   544 993**
**FR-A- 1 600 245**
**FR-A- 2 098 378**
**FR-A- 2 104 443**
**FR-A- 2 134 494**
**FR-A- 2 350 550**
**FR-A- 2 401 978**
**US-A- 1 740 610**
**US-A- 3 027 854**
**US-A- 4 217 175**

(73) Titulaire : **LE JEUNE, Gwénolé**
**Rue du Vignoble**
**F-44450 St. Julien de Concelles (FR)**

(72) Inventeur : **LE JEUNE, Gwénolé**
**Rue du Vignoble**
**F-44450 St. Julien de Concelles (FR)**

(74) Mandataire : **Pinguet, André**
**CAPRI 28 bis, avenue Mozart**
**F-75016 Paris (FR)**

Jouve, 18, rue St-Denis, 75001 Paris, France

## Description

La présente invention a pour objet un procédé et un dispositif de traitement de produits humides, afin d'en extraire des composants valorisés et/ou de l'énergie. L'invention s'applique en particulier aux ordures ménagères et autres résidus urbains, mais peut être appliquée aussi à des produits qui ne sont ni des déchets ni des résidus, mais des matières premières humides telles que tourbe, végétaux, paille, foin, par exemple. Il est bien entendu que si dans le texte ci-après, l'on se réfère davantage aux ordures ménagères, c'est parce que l'invention apporte dans ce cas un avantage particulièrement important, mais elle n'est en aucun cas limitée à cette application.

L'accumulation des déchets de toutes sortes, notamment des ordures ménagères, pose un problème, car il faut les faire disparaître, pour le minimum de dépense. Une des difficultés est la teneur en humidité importante des déchets, environ un tiers en moyenne par exemple pour les ordures ménagères.

Les installations connues de traitement des ordures ménagères procèdent généralement soit par combustion ou pyrolyse des déchets bruts, soit par fabrication d'un compost destiné à l'agriculture et obtenu par différents triages, broyages et criblages de mêmes déchets bruts. Dans un cas comme dans l'autre, la dépense est importante.

On connaît en particulier, par le brevet des USA n° 3 027 854 un dispositif comportant un canal tubuleur rectiligne à une extrémité duquel on introduit des produits humides, un organe d'avancement tel qu'une vis pour faire cheminer les produits humides jusqu'à l'autre extrémité où ils tombent dans un foyer, après avoir été desséchés par les gaz de combustion du foyer qui parcourent le canal en sens inverse. Les gaz chauds dessèchent les produits humides par vaporisation de l'eau. Ce dispositif permet de réduire à des cendres le volume des produits humides, mais ne fournit pas d'énergie à l'extérieur, et on ne récupère rien des éléments valorisables des produits qui ont été brûlés.

Selon la présente invention, on récupère des composants valorisés, et/ou de l'énergie.

Ce résultat est obtenu par un procédé dans lequel on déshydrate les produits par compression puis on les pyrolyse à l'abri de l'air.

Selon l'invention, un procédé de traitement de produits humides tels que des déchets, des ordures ménagères ou autres produits, en particulier agricoles ou forestier comme du foin, en vue de leur transformation avec récupération de produits de valeur et d'énergie, dans lequel on fait circuler les déchets à l'abri de l'oxygène dans un canal tubulaire rectiligne, où ils sont réchauffés, en les poussant vers un foyer, est caractérisé en ce que :
— on comprime un paquet de déchets dans une presse pour les déshydrater et récupérer des liquides ou boues le plus souvent valorisables ;
— on fait avancer les paquets de déchets à la sortie de la presse vers une installation thermique à travers un canal tubulaire avec formation d'un bourrage étanche formé par les déchets ;
— on réchauffe les déchets déshydratés à l'abri de l'oxygène, à une température comprise entre 350 et 1 200 °C, dans le canal tubulaire, pour en dégager des gaz combustibles et faire du coke ;
— on brûle une partie des produits obtenus et la chaleur dégagée est utilisée pour le réchauffage des déchets déshydratés, et dans lequel ;
— les déchets se déplacent suivant un trajet rectiligne au cours des trois premières opérations, la presse comportant un piston mobile dans l'axe du trajet rectiligne, une course complémentaire du piston après ouverture de la presse faisant avancer le lingot formé par le paquet de déchets qui vient d'être comprimé, en poussant vers un foyer les lingots formés dans les opérations de compression précédentes.

La compression est opérée sous une pression très élevée, plusieurs centaines de bar. Les produits humides sont ainsi libérés de l'eau de façon économique et rapide, et les gâteaux résultant de la compression constituent un produit combustible de qualité suffisante pour réaliser la pyrolyse tout en laissant un bilan calorifique positif permettant une utilisation supplémentaire, telle que le chauffage d'une serre ou la combustion dans une cimenterie, ce qui implique une implantation voisine de l'installation de traitement des produits humides.

Généralement, le pouvoir calorifique (PCI) des ordures brutes est 6 270 à 7 520 kJ/kg (1 500 à 1 800 kcal/kg) et environ un tiers de leur masse est de l'eau. Après déshydratation par compression, le PCI de ce produit sec passe à une valeur de l'ordre de 8 370 à 12 560 kJ/kg (2 000 à 3 000 kcal/kg) ce qui permet de le considérer comme un véritable combustible, alors que cela est impossible avec les ordures brutes.

Avantageusement, un dispositif pour la mise en œuvre du procédé selon l'invention du type, comportant un organe de transfert et de réchauffage des produits, formé par un conduit tubulaire débouchant à la partie supérieure d'un foyer, avec des moyens pour faire cheminer les produits dans ledit conduit, est caractérisé en ce qu'il comporte en outre :
— à l'extrémité du conduit opposée au foyer, une presse avec chambre de compression cylindrique sensiblement horizontale avec un piston de compression d'un côté et une paroi mobile de l'autre côté, des moyens étant prévus pour faire effectuer au piston une course supplémentaire après enlèvement de la paroi mobile pour déplacer les produits comprimés au-delà de la paroi mobile, des orifices étant prévus dans la chambre pour laisser sortir les produits fluables pendant la compression ;
— une partie au moins du conduit, à l'extrémité située du côté de la presse étant alignée

2

avec celle-ci ; et une gaine tubulaire, entourant le conduit tubulaire depuis un premier emplacement situé entre la presse et le foyer, jusqu'au foyer lui-même, pour le passage des gaz de combustion et le chauffage des lingots cheminant dans le conduit tubulaire.

La disposition horizontale de l'axe du vérin de la presse est très préférable. Il serait possible d'incliner l'axe, mais ce ne serait pas avantageux. Le conduit tubulaire de cheminement peut être rectiligne, courbe ou angulaire. La partie finale (proche du foyer) est réchauffée par les gaz de combustion.

Par rapport aux ordures brutes, on trouve dans le conduit tubulaire, à la sortie de la presse, un matériau sec et débarrassé de l'essentiel des matières organiques à faible pouvoir calorifique et surtout à combustion très polluante.

La description qui va suivre, en regard des dessins annexés, donnée à titre d'exemple non limitatif, fera bien comprendre comment l'invention peut être réalisée.

Les figures 1 à 4 sont des coupes schématiques, la figure 1 par un plan vertical, les autres par un plan horizontal, d'un exemple de réalisation de la partie compression d'un dispositif selon l'invention ;

La figure 5 est une vue en coupe longitudinale schématique d'un mode de réalisation d'un dispositif selon l'invention ;

La figure 6 est une vue analogue à la figure 5 d'un autre mode de réalisation.

Un dispositif pour mettre en œuvre le procédé de l'invention comprend dans son ensemble trois parties principales : une installation de compression, un four tubulaire de pyrolyse et un foyer. Le four de pyrolyse est constitué par un conduit tubulaire dans lequel cheminent les produits. Ce conduit peut être entièrement horizontal, ou il peut comporter une partie verticale.

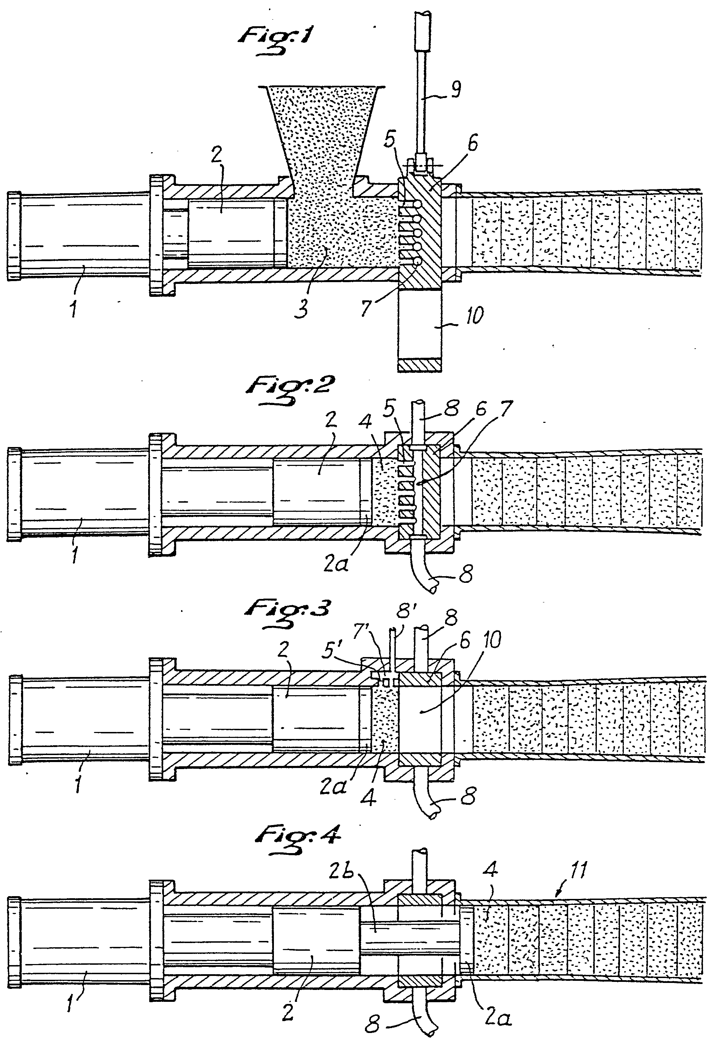

L'installation de compression chasse mécaniquement l'eau hors du produit humide, ce qui donne de façon économique un produit ayant un pouvoir calorifique suffisant pour récupérer de l'énergie. Un exemple d'installation de compression est représenté schématiquement sur les figures 1 à 4. Il est bien entendu que l'on peut utiliser toute installation permettant de chasser l'eau suffisamment et de former un résidu sec dense et calibré, et notamment une presse à séparation de phases comportant un (ou plusieurs) poinçon pénétrant dans une matière déjà compactée.

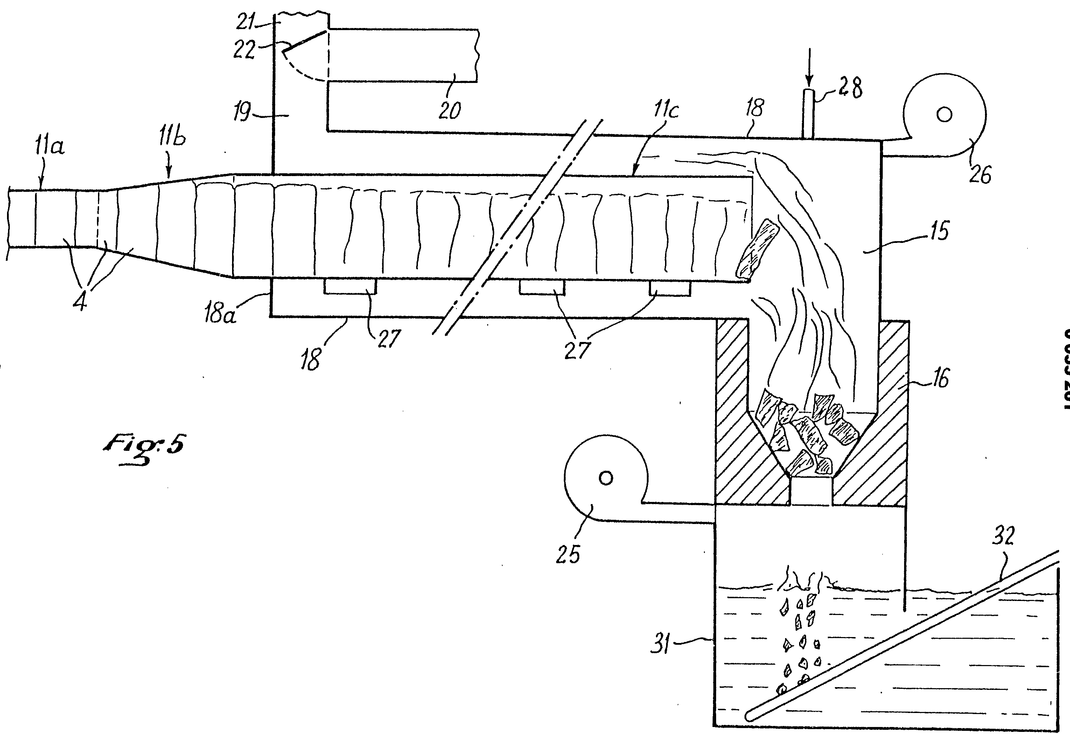

La figure 1 représente la presse en élévation avec coupe partielle schématique. Un vérin hydraulique 1 pousse un piston 2 dans l'axe du tube 11 alors que les produits humides, par exemple des ordures ménagères sont introduites devant le piston de la chambre de compression 3. La figure 2 montre la même presse, vue de dessus, alors que le piston 2 poussé par le vérin 1 a formé un gâteau ou lingot comprimé 4 devant lui. L'eau et les matières organiques fluables formant des boues sont extraites au moins par les orifices 5 pratiqués dans la plaque mobile 6 du fond ou par des orifices 5' (figure 3) pratiqués dans la paroi cylindrique de la chambre. Pendant la compression, les canaux transversaux 7 et/ou 7' collectant les boues communiquent avec les canaux extérieurs 8 et/ou 8' par des raccords appropriés pour les orifices fixes 5' et par coïncidence des orifices pour les orifices 5 de la plaque mobile 6. Les canaux collecteurs 7 débouchent alors dans au moins une des faces latérales de glissement de la plaque de façon à venir en coïncidence avec des orifices des canalisations d'évacuation quand la plaque est en position d'obturation de la chambre. On peut également utiliser des tuyaux flexibles. Dans le cas des ordures ménagères, les boues issues de la compression, qui sont une gêne en tant que combustible, deviennent très intéressantes en tant que matériau biodégradable puisqu'elles sont constituées pour plus des deux tiers de matières organiques (soit plus du double d'un compost classique). Les boues, prises telles quelles, ou séchées et le cas échéant pasteurisées, avec éventuellement des additifs, peuvent servir d'engrais de qualité élevée, ou d'aliment pour animaux (porcs, poissons et crustacés, etc.).

Comme représenté sur la figure 3, après la compression des déchets, la plaque 6 est translatée, par exemple à l'aide du vérin 9 (figure 1) de façon à amener l'orifice 10 dans le prolongement de la chambre de compression 3. Enfin, la figure 4 montre comment le lingot 4 est poussé dans le tube de chauffe 11, par le piston 2 ou un élément de ce piston, qui peut être la face 2a du piston, poussée par la tige 2b formant vérin télescopique, en poussant devant lui toute la colonne des lingots 4 injectés au cours des opérations précédentes. Le piston 2, la chambre de compression 3, l'orifice 10 de la plaque 6 et le début du tube 11 sont sensiblement de même section.

Différents types de presse peuvent convenir, à partir du moment où ils peuvent fournir un lingot dont la section frontale reste constante. Les presses doivent être capables également de comprimer les produits à une pression suffisamment forte pour que l'extraction de l'eau et des matières organiques fluables soit possible. Plusieurs centaines de bar sont le plus souvent nécessaires.

Les boues sont collectées par un ou plusieurs canaux 8 et des lingots sont injectés en force dans un tube 11 de sensiblement même section 11a (figure 5) qu'eux ; de cette façon, à aucun moment, les lingots, qui possèdent après compression une importante élasticité, n'ont pu se détendre radialement. Ainsi, leur succession sur une certaine longueur (par exemple quelques épaisseurs de lingot) dans le tube 11 est étanche aux gaz qui seront produits en aval. Ce tube est ensuite avantageusement rendu conique divergent de quelques degrés 11b ou de plus grande section, de façon à éviter tout arc-boutement des lingots injectés en force. A titre d'exemple, le diamètre peut passer de 380 à 500 mm. En outre, la compression à plusieurs centaines de bar desdits lingots garantit leur absence de porosité.

La figure 5 représente un premier mode de réalisation. A la suite de la partie divergente 11b, le tube comporte une autre partie cylindrique 11c, dont la longueur est déterminée en vue de l'opération de pyrolyse que l'on va décrire maintenant. A son extrémité de sortie (à droite sur la figure 5), le tube 11 débouche dans un foyer 15 dont la partie inférieure 16 peut être réfractaire. La partie 11c du tube 11 est entourée d'un manchon 18 dont l'extrémité droite débouche dans le foyer 16, l'étanchéité étant assurée autour du raccordement au foyer du manchon 18. Sur le côté gauche, le manchon 18 est fermé en 18a autour du tube 11, et un tube 19 permet l'échappement des gaz et fumées vers une ou plusieurs directions possibles 20, 21, au moyen d'un volet 22 par exemple. Un compresseur 25 fournit de l'air comburant au foyer 16. Un autre compresseur 26 fournit de l'air à la partie supérieure du foyer, pour parfaire la combustion ou assurer la combustion d'une partie ou de la totalité des gaz de pyrolyse. Un brûleur 28 peut être prévu, afin de fournir du carburant pour la mise en route de l'installation. Pour assurer l'étanchéité, dans un exemple de réalisation le bas du foyer plonge dans une cuve 31 pleine d'eau. Des moyens 32 sont prévus pour extraire les produits solides tombant au fond de l'eau.

Selon un autre mode de réalisation de l'invention, on peut utiliser un réservoir clos, formant sas, ce qui permet de récupérer la partie coke sans la mouiller et sans produire de gaz à l'eau ni vapeur. Dans ce dernier cas, le tube de pyrolyse doit être chauffé indirectement par ailleurs.

Suivant une disposition préférentielle, le dispositif fonctionne de la façon suivante. Des lingots 4, poussés les uns à la suite des autres avancent dans le tube 11. L'étanchéité est assurée dans la partie 11a, à la sortie de la presse, comme indiqué ci-dessus. La partie divergente 11b évite les blocages et permet à la presse de faire avancer un train de lingots de grande longueur sans dépense excessive de puissance. Dans la partie 11c, les lingots avancent avec un jeu assez large, pour présenter moins de résistance, et laisser passer les gaz de pyrolyse. Sur toute la partie 11c, le tube est chauffé à une température de l'ordre de 350 à 1 200 °C par les gaz de combustion du foyer 16. Ces fumées passent autour du tube 11, entre le tube et le manchon 18, de façon à chauffer le tube 11, qui peut comporter dans ce but des ailettes 27, de toute forme appropriée, ondulée, hélicoïdale, etc.

Sous l'effet du chauffage, les éléments volatils se dégagent dans le tube 11 et se dirigent vers la sortie, à droite. Les lingots se transforment progressivement en coke jusqu'à ce qu'ils basculent dans le foyer 16. La longueur de la partie 11c du tube doit être établie pour permettre une pyrolyse complète : l'extérieur étant porté de 800 à 1 000 °C, les lingots doivent être distillés et pyrolisés à cœur. Il faut que les lingots restent un temps suffisant, en fonction de leur diamètre. Par exemple, pour des lingots de 380 mm, il faut environ une heure : ce qui conduit à une longueur de 25 m pour une presse pouvant débiter 4 tonnes/heure. Avec un tube de sortie de presse de 250 mm (2 T/h), il faut environ 12 m.

Les lingots transformés en coke, tombent dans le foyer 16 où il brûlent avec l'air envoyé en quantité appropriée par le compresseur 25. En dosant convenablement l'air, on peut avoir une combustion complète. Avec des résidus d'ordures ménagères de type ordinaire, le coke est porté à une température de 1 600 à 2 000°. Après combustion dans la chambre, il tombe dans le fond des stérils fondus : verre, métal, qui se granulent dans l'eau et sont extraits par un moyen approprié quelconque 32.

L'eau constitue un moyen commode pour refroidir et assurer l'étanchéité, mais cette disposition n'est pas limitative de l'invention.

Les fumées de combustion du coke, avec les gaz de pyrolyse qui sont chauds, passent dans le manchon 18 et entretiennent, maintiennent la température du tube 11 et ressortent en 19 après avoir cédé une partie de leur enthalpie.

En régime permanent, la combustion du coke suffit dans la plupart des cas pour réchauffer suffisamment les lingots progressant dans le tube 11. Si c'était nécessaire pour des produits particulièrement pauvres, on peut en outre brûler les gaz en injectant de l'air au moyen d'un compresseur 26. Un brûleur 28 est prévu pour le démarrage de l'installation (gaz ou huile combustible). On se rend compte à ce stade que l'ensemble peut fonctionner en incinérateur. Il suffit que la quantité d'air injectée soit suffisante pour brûler l'ensemble des solides et gaz combustibles.

Dans le cas général, le gaz à l'air mélangé aux fumées du coke est prélevé en 19 et peut être utilisé, par exemple dans une cimenterie ou pour chauffer une serre. Un volet de déviation permet d'orienter le gaz vers l'une ou l'autre utilisation, ou vers une torchère pour le brûler, si l'installation consommatrice est à l'arrêt. On placera un tel dispositif selon l'invention au voisinage d'une utilisation des calories, pour conserver au maximum la température du gaz sortant en 19 (environ 600 °C). A ce gaz à l'air se mélangera du gaz à l'eau, provenant de la vapeur d'eau émise lors de la chute dans l'eau des scories incandescentes. Le gaz pourra aussi être prélevé à un autre endroit, par exemple directement hors du tube 11 par une tuyauterie placée dans la zone voisine de la zone la plus chaude de façon à obtenir un gaz le plus possible exempt de goudrons, de vapeur d'eau et de gaz malodorants.

Au moins dans la partie la plus chaude du tube 11 et du manchon 18, et pour le haut du foyer 15, on utilisera des tôles réfractaires, pouvant résister à 1 000 °C.

On peut avantageusement prévoir une régulation, fonction de la distribution des températures dans l'espace compris entre le tube et le manchon. Si la température monte trop, on peut diminuer l'entrée d'air, mais ceci conduit à des imbrûlés et l'on peut avoir des dépôts qui peuvent colmater l'installation. On peut aussi injecter de l'eau ou de la vapeur d'eau. Si, par contre, la température descend trop, on ajoute de l'air, et on brûle une partie des gaz de pyrolyse.

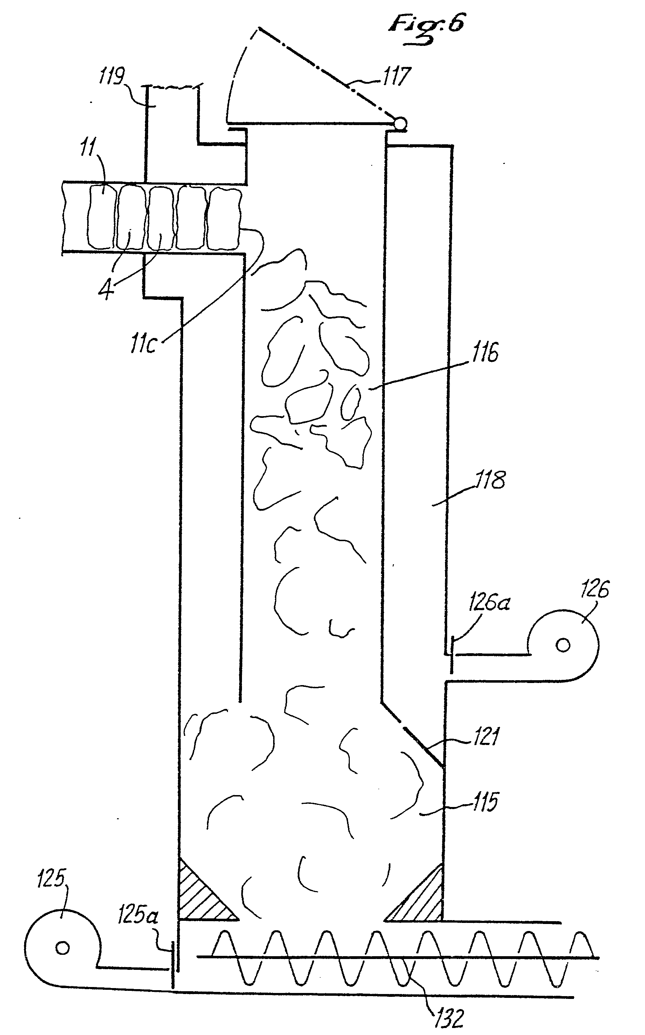

Dans la variante de réalisation de la figure 6, le conduit tubulaire joignant la presse au foyer forme un angle : une partie seulement 11 est horizontale et la deuxième partie verticale 116 forme une cheminée au-dessus du foyer 115. L'extrémité supérieure 117 de la cheminée peut être ouverte ou fermée selon les applications ou les modes de fonctionnement. La cheminée est entourée d'un manchon 118 muni d'une tubulure de sortie 119 à la partie supérieure. Un système d'extraction 132 est prévu à la partie inférieure du foyer. Ce peut être une vis, comme représenté schématiquement, ou une grille mécanique à cheville, un tiroir à vérin ou tout dispositif similaire bien connu pour l'extraction de cendre ou de coke. Un ventilateur 125 est disposé en dessous du foyer, et un ventilateur 126 est disposé dans le bas du manchon 118 au-dessus du foyer. Dans cette forme de réalisation, une partie du trajet des lingots, de la presse au foyer, est verticale. Dans la partie verticale, les lingots se déplacent sous l'effet de la pesanteur. Ceci élimine les risques de blocage. La partie verticale du conduit tubulaire peut avoir une largeur différente de la partie horizontale.

Le dispositif fonctionne de la façon suivante. Les lingots 4 poussés par le piston 2a débouchent à l'extrémité 11c du tube 11 et tombent dans la cheminée 116 et descendent dans le foyer. Il se forme une accumulation de lingots dans le foyer et la cheminée, jusqu'à une certaine hauteur qui est fonction du régime de marche de l'installation et de la vitesse d'extraction du système 132.

Plusieurs régimes sont possibles :

1) Incinération. Le clapet 117 peut être ouvert. De l'air pénètre dans la cheminée et traverse les lingots entassés, et parvient jusqu'au foyer 115 où se produit la combustion. Les gaz chauds, qui peuvent recevoir de l'air secondaire de combustion par le ventilateur 125 et/ou le ventilateur 126 remontent dans la double paroi du manchon 118 et réchauffent les lingots entassés, en les transformant en coke. Le coke et les gaz dégagés brûlent dans le foyer, et se dégagent par le tube 119 d'où ils peuvent être aspirés vers une installation susceptible de récupérer les calories restantes après réchauffage des lingots, une chaudière par exemple. Les cendres sont évacuées par le système 132. Il n'est pas nécessaire de prévoir une grille 121 entre la cheminée et la paroi du foyer, les matières en combustion n'ayant pas tendance à remonter dans le manchon. Le dispositif est particulièrement simple et ne comporte pas d'élément susceptible de se déformer. Cependant, une grille n'est pas gênante et peut avoir pour fonction de renforcer la structure. On note que l'air traverse les lingots avant de les oxyder, le fonctionnement étant analogue à celui d'une pipe. Le clapet 117 étant ouvert, il n'est pas nécessaire que les lingots 4 obturent le tube 11 de façon étanche, et un tel incinérateur peut fonctionner indépendamment de la presse représentée sur les figures 1 à 4. Il pourrait être alimenté par exemple par un tapis roulant déversant dans le gueulard de la cheminée les produits à incinérer.

2) pyrolyse avec récupération de gaz combustibles. Le clapet 117 est fermé, ainsi que le clapet 126a du ventilateur 126 qui est arrêté. Le ventilateur 125 débite la quantité d'air nécessaire et suffisante pour la combustion des lingots dégazés, c'est-à-dire du coke, formé dans la cheminée 116. Le gaz s'échappe par le tube 119 vers une installation de combustion appropriée. Le système 132 évacue les cendres.

3) pyrolyse avec récupération du coke. Le clapet 117 est fermé ainsi que le clapet 125a du ventilateur 125 qui est à l'arrêt. On utilise une grille 121 créant une perte de charge à la sortie des gaz et une injection d'air par le ventilateur 126. Les gaz brûlent dans le manchon en réchauffant la cheminée et les lingots, provoquant le dégazage de ceux-ci avec formation de coke. Le système 132 extrait alors du coke. La sortie doit se faire avec étanchéïté, sans quoi de l'air peut pénétrer et oxyder le coke. Il est possible de fabriquer ainsi du charbon actif avec un sas étanche. L'extinction du coke incandescent se fait avec un gaz neutre, azote ou gaz carbonique.

Dans la réalisation de la figure 6, le dégazage des lingots se fait pendant un trajet vertical decendant, sous l'effet de la pesanteur, dans la cheminée 116, tandis que sur la figure 5, le dégazage se fait sur un trajet horizontal, les lingots avançant sous la poussée de la presse. Selon les dimensions de l'installation, et selon la nature des produits, il se peut que les frottements dans le cheminement horizontal soient excessifs. Dans la descente verticale de la figure 6, cette difficulté est éliminée. En outre, le diamètre de la cheminée peut être supérieur sans limitation à celui de progression horizontale.

Comme indiqué dans la partie supérieure gauche de la figure 6, l'enveloppe de réchauffage peut s'étendre à la fois sur le trajet de la cheminée verticale et sur la fin du trajet horizontal autour d'une partie plus ou moins longue du tube 11. On peut ainsi combiner les dispositions des figures 5 et 6, en fonction par exemple des espaces disponibles, des débits de produits à traiter, etc...

En général, le tube 11 sera disposé horizontalement. On ne sort pas du cadre de l'invention en l'inclinant, de façon à utiliser la pesanteur pour faciliter la progression des lingots.

Par rapport aux divers procédés connus, notamment pour l'élimination des ordures, celui-ci présente les avantages d'être continu, et de fournir un bilan positif, au lieu de consommer de l'énergie.

## Revendications

1. Procédé de traitement de produits humides tels que des déchets, des ordures ménagères ou autres produits, en particulier agricoles ou forestier comme du foin, en vue de leur transformation avec récupération de produits de valeur et d'énergie, dans lequel on fait circuler les déchets à l'abri de l'oxygène dans un canal tubulaire rectiligne où ils sont réchauffés, en les poussant vers un foyer, caractérisé en ce que :

— on comprime un paquet de déchets dans une presse pour les déshydrater et récupérer des liquides ou boues le plus souvent valorisables ;

— on fait avancer les paquets de déchets à la sortie de la presse vers une installation thermique à travers un canal tubulaire avec formation d'un bourrage étanche formé par les déchets ;

— on réchauffe les déchets déshydratés à l'abri de l'oxygène à une température comprise entre 350 et 1 200 °C, dans le canal tubulaire, pour en dégager des gaz combustibles et faire du coke ;

— on brûle une partie des produits obtenus et la chaleur dégagée est utilisée pour le réchauffage des déchets déshydratés, et dans lequel ;

— les déchets se déplacent suivant un trajet rectiligne au cours des trois premières opérations, la presse comportant un piston mobile dans l'axe du trajet rectiligne, une course complémentaire du piston après ouverture de la presse faisant avancer le lingot formé par le paquet de déchets qui vient d'être comprimé, en poussant vers un foyer les lingots formés dans les opérations de compression précédentes.

2. Procédé selon la revendication 1, caractérisé en ce que les lingots sont réchauffés pendant leur progression horizontale.

3. Procédé selon la revendication 1, caractérisé en ce que les lingots sont réchauffés pendant leur descente dans le foyer.

4. Procédé selon une des revendications précédentes, caractérisé en ce que l'on brûle le gaz et on récupère le coke.

5. Procédé selon une des revendications 1 à 3, caractérisé en ce que l'on brûle le coke et on récupère le gaz.

6. Procédé selon une des revendications 1 à 3, caractérisé en ce que l'on brûle le gaz et le coke et on récupère des gaz chauds.

7. Dispositif pour la mise en œuvre du procédé selon une des revendications précédentes, du type comportant un organe de transfert et de réchauffage des produits, formé par un conduit tubulaire (11) débouchant à la partie supérieure d'un foyer (15), avec des moyens pour faire cheminer les produits dans ledit conduit, caractérisé en ce qu'il comporte,

— à l'extrémité du conduit (11) opposée au foyer (15), une presse avec chambre de compression cylindrique sensiblement horizontale avec un piston de compression (2) d'un côté et une paroi mobile (6) de l'autre côté, des moyens (1) étant prévus pour faire effectuer au piston une course supplémentaire après enlèvement de la paroi mobile pour déplacer les produits comprimés au-delà de la paroi mobile, des orifices (8) étant prévus dans la chambre pour laisser sortir les produits fluables pendant la compression ;

— une partie (11a) au moins du conduit, à l'extrémité située du côté de la presse étant alignée avec celle-ci ; et une gaine tubulaire (18), entourant le conduit tubulaire depuis un premier emplacement situé entre la presse et le foyer, jusqu'au foyer lui-même, pour le passage des gaz de combustion et le chauffage des lingots cheminant dans le conduit tubulaire.

8. Dispositif selon la revendication 7, caractérisé en ce que le conduit tubulaire (11) joignant la presse au foyer est rectiligne, la gaine tubulaire (18) entourant la partie du conduit située à partir du foyer.

9. Dispositif selon la revendication 7, caractérisé en ce que le conduit tubulaire forme un angle, la partie (116) située du côté du foyer étant sensiblement verticale et formant une cheminée au-dessus du foyer (115), la gaine tubulaire (118) entourant au moins cette partie verticale.

10. Dispositif selon la revendication 8, caractérisé en ce que la section (11c) du tube est plus grande du côté sortie, à partir d'un deuxième emplacement situé entre l'entrée et le premier emplacement.

11. Dispositif selon la revendication 10, caractérisé en ce que la section plus grande (11c) est raccordée au début du tube par une section conique 11b.

12. Dispositif selon une des revendications précédentes, caractérisé en ce que la gaine tubulaire comporte des moyens (19, 119) de captage de gaz à son extrémité située vers la presse.

**Claims**

1. A method of treatment of moist products such as waste, household refuse or other products, in particular agricultural or forest products like hay, with a view to their transformation with recovery of products of value and of energy, in which the waste are moved without contact with oxygen, through a straight tubular channel where said wastes are heated, whilst being pushed towards a hearth ; characterized in that :

— a bundle of waste is compressed in a press in order to dehydrate it and recover liquids or sludge which more often than not is valuable ;

— on leaving the press the bundles of waste are moved forward to a thermal plant through a tubular channel with the formation of an airtight packing formed by the waste ;

— the dehydrated waste is heated without contact with oxygen up to a temperature lying between 350 and 1,200 °C in order to release combustible gases from it and make coke ;

— a portion of the products obtained is burned and the heat released is employed for the heating of the dehydrated waste ; and in this method :

— the waste is moved along a straight path during the course of the first two operations, the press including a piston movable along the axis of the straight path, a complementary stroke of the piston after opening of the press moving forward the slug formed by the bundle of waste which has just been compressed, so pushing towards a hearth the slugs formed in the preceding operations of compression.

2. A method as in claim 1, characterized in that the slugs are heated up during their horizontal progress.

3. A method as in claim 1, characterized in that the slugs are heated up during their descent into the hearth.

4. A method as in one of the preceding claims, characterized in that the gas is burned and the coke is recovered.

5. A method as in one of the claims 1 to 3, characterized in that the coke is burned and the gas is recovered.

6. A method as in one of the claims 1 to 3, characterized in that the gas and the coke are burned and hot gases are recovered.

7. A device for implementing the method as in one of the preceding claims, of the type comprising a member for transfer and heating of the products, formed by a tubular duct (11) opening in the upper part of a hearth (15), and means for moving the products in said duct, characterized in that it includes :

— at the end of channel (11) opposite to hearth (15), a press having a substantially horizontal cylindrical compression chamber with a piston (2) for compression at one side and a movable wall (6) at the other side, means (1) being provided for making the piston carry out a complementary stroke after removal of the movable wall, in order to move the compressed products beyond the movable wall, orifices (8) being provided in the chamber for letting the fluid products run out during the compression ;

— at least one portion (11a) of the duct at the end located next the press being aligned with the latter ; and a tubular sheath (18) surrounding the tubular duct from a first location lying between the press and the hearth up to the hearth itself, for the flow of the gases of combustion and the heating of the slugs advancing in the tubular duct.

8. A device as in claim 7, characterized in that the tubular duct joining the press to the hearth is straight, with the tubular sheath (18) surrounding the portion of the duct situated next the hearth.

9. A device as in claim 7, characterized in that the tubular duct forms an angle, the portion (116) situated next the hearth being substantially vertical and forming a chimney above the hearth (115), the tubular sheath (118) surrounding as least this vertical portion.

10. A device as in claim 8, characterized in that the section (11c) of the tube is greater next the outlet, starting from a second location situated between the inlet and the first location.

11. A device as in claim 10, characterized in that the larger section (11c) is connected to the start of the tube by a tapered section.

12. A device as in one of the claims 7 to 11, characterized in that the tubular sheath includes means (19, 119) for collection of gas at the end of it situated towards the press.

**Patentansprüche**

1. Verfahren zur Verarbeitung von feuchten Produkten wie z. B. Abfall, Hausmüll oder anderen, insbesondere landwirtschaftlichen oder forstwirtschaftlichen Produkten wie heu, hinsichtlich ihrer Umwandlung mit Rückgewinnung von wertvollen Stoffen und von Energie, bei dem der Abfall unter Abschluß von Sauerstoff in einem geraden röhrenförmigen Kanal in Umlauf gebracht wird, wo er vorgewärmt wird, indem er zu einem Feuerraum hin geschoben wird, dadurch gekennzeichnet, daß

— ein Abfallpaket in einer Presse komprimiert wird, um den Abfall zu entfeuchten und meistens verwertbare Flüssigkeiten oder Schlämme rückzugewinnen ;

— die Abfallpakete am Ausgang der Presse zu einer thermischen Einrichtung hin durch einen röhrenförmigen Kanal mit Ausbildung einer undurchlässigen Dichtung vorbewegt wird, die durch den Abfall gebildet ist ;

— der entfeuchtete Abfall unter Abschluß von Sauerstoff bei einer eingeschlossenen Temperatur zwischen 350 und 1 200 °C im röhrenförmigen Kanal vorgewärmt wird, um aus ihm brennbare Gase freizusetzen und Koks zu bilden ;

— ein Teil der erhaltenen Produkte verbrannt wird und die abgegebene Wärme für das Vorwärmen des entfeuchteten Abfalls genutzt wird, und bei dem ;

— sich der Abfall im Verlauf der drei ersten Arbeitsgänge längs einer geraden Bahn fortbewegt, wobei die Presse einen beweglichen Kolben in der Achse der geraden Bahn umfaßt, wobei ein komplementärer Hub des Kolbens nach dem Öffnen der Presse den durch das Abfallpaket, das gerade komprimiert worden ist, gebildeten Block fortschiebt, indem er die während der vorhergehenden Kompressionsarbeitsschritte gebildeten Blöcke zu einem Feuerraum hinschiebt.

2. Verfahren nach Anspruch 1, dadurch gekennzeichnet, daß die Blöcke während ihrer horizontalen Fortbewegung erwärmt werden.

3. Verfahren nach Anspruch 1, dadurch gekennzeichnet, daß die Blöcke während ihrer Herabbewegung in den Feuerraum erwärmt werden.

4. Verfahren nach einem der vorhergehenden Ansprüche, dadurch gekennzeichnet, daß das Gas verbrannt wird und der Koks rückgewonnen wird.

5. Verfahren nach einem der Ansprüche 1 bis 3, dadurch gekennzeichnet, daß der Koks verbrannt wird und das Gas rückgewonnen wird.

6. Verfahren nach einem der Ansprüche 1 bis 3, dadurch gekennzeichnet, daß das Gas und der Koks verbrannt werden und heiße Gase rückgewonnen werden.

7. Vorrichtung zur Durchführung des Verfahrens nach einem der vorhergehenden Ansprüche von der Art, die eine Einrichtung zur Überführung und Erwärmung der Produkte umfaßt, die durch einen röhrenförmigen Kanal (11) gebildet ist, der in den oberen Teil eines Feuerraums (15) mündet, mit Mitteln, um die Produkte in dem Kanal vorzubewegen, dadurch gekennzeichnet, daß er umfaßt.

— am zum Feuerraum (15) entgegengesetzten Ende des Kanals (11) eine Presse mit einer im wesentlichen horizontalen zylindrischen Kompressionskammer mit einem Kompressionskolben (2) auf einer Seite und einer beweglichen Wand (6) auf der anderen Seite, wobei bewegliche Mittel (1) vorgesehen sind, um auf den Kolben einen zusätzlichen Hub nach Abheben der beweglichen Wand auszuüben, um die komprimierten Produkte auf die andere Seite der beweglichen Wand zu verschieben, wobei Öffnungen (8) in der Kammer vorgesehen sind, um die fließfähigen Produkte während der Kompression austreten zu lassen ;

— mindestens einen Teil (11a) des Kanals der am Ende zur Presse hin gelegen und mit dieser ausgerichtet ist ; und eine röhrenförmige Umhüllung (18), die den röhrenförmigen Kanal von einer ersten zwischen der Presse und dem Feuerraum gelegenen Stelle bis zum Feuerraum selbst für den Durchlaß der Verbrennungsgase und die Erwärmung der Blöcke, die im röhrenförmigen Kanal wandern, umgibt.

8. Vorrichtung nach Anspruch 7, dadurch gekennzeichnet, daß der röhrenförmige Kanal (11), der die Presse mit dem Feuerraum verbindet, gerade ist, wobei die röhrenförmige Umhüllung (18) den vom Feuerraum her gelegenen Teil des Kanals umgibt.

9. Vorrichtung nach Anspruch 7, dadurch gekennzeichnet, daß der röhrenförmige Kanal einen Winkel bildet, wobei der an der Seite des Feuerraums gelegene Teil (116) im wesentlichen vertikal ist und einen Kamin oberhalb des Feuerraums (115) bildet, wobei die röhrenförmige Umhüllung (118) zumindest diesen vertikalen Teil umgibt.

10. Vorrichtung nach Anspruch 8, dadurch gekennzeichnet, daß der Abschnitt (11c) des Rohrs auf der Ausgangsseite von einer zweiten Stelle an größer ist, die zwischen dem Eingang und der ersten Stelle liegt.

11. Vorrichtung nach Anspruch 10, dadurch gekennzeichnet, daß der größere Abschnitt (11c) mit dem Anfang des Rohrs durch einen konischen Abschnitt (11b) verbunden ist.

12. Vorrichtung nach einem der vorhergehenden Ansprüche, dadurch gekennzeichnet, daß die röhrenförmige Umhüllung Mittel (19, 119) zur Aufnahme von Gas an dem zur Presse hin gelegenen Ende umfaßt.

Fig.1

Fig.2

Fig.3

Fig.4

Fig.5

*Fig.6*